(19) Europäisches Patentamt
European Patent Office
Office européen des brevets

(11) EP 3 160 192 B1

(12) EUROPEAN PATENT SPECIFICATION

(45) Date of publication and mention of the grant of the patent:
**30.01.2019 Bulletin 2019/05**

(51) Int Cl.:
***H04W 52/02*** *(2009.01)* ***H04W 24/02*** *(2009.01)*
*H04W 84/04* *(2009.01)*

(21) Application number: **15306700.4**

(22) Date of filing: **23.10.2015**

# (54) A TELECOMMUNICATION CONTROLLER, AND METHOD OF CONTROLLING MULTIPLE SMALL CELL BASE STATIONS

TELEKOMMUNIKATIONSSTEUERUNG UND VERFAHREN ZUR STEUERUNG MEHRERE KLEINZELLEN BASISSTATIONEN

CONTRÔLEUR DE TÉLÉCOMMUNICATION ET PROCÉDÉ DE COMMANDE DE PLUSIEURS STATIONS DE BASE À PETITES CELLULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.04.2017 Bulletin 2017/17**

(73) Proprietor: **Alcatel Lucent**
**91620 Nozay (FR)**

(72) Inventors:
- **HO, Lester**
  **15 Dublin (IE)**
- **CLAUSSEN, Holger**
  **15 Dublin (IE)**
- **GACANIN, Harris**
  **2018 Antwerp (BE)**

(74) Representative: **Nokia EPO representatives**
**Nokia Technologies Oy**
**Karaportti 3**
**02610 Espoo (FI)**

(56) References cited:
**US-A1- 2012 307 780 US-A1- 2013 223 317**

- **"3rd Generation Partnership Project; Technical Specification Group Radio Access Network; Evolved Universal Terrestrial Radio Access (E-UTRA); Study on Energy Saving Enhancement for E-UTRAN (Release 12)", 3GPP DRAFT; R3-141502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 May 2014 (2014-05-24), XP050821568, Retrieved from the Internet: URL:http://www.3gpp.org/ftp/tsg_ran/WG3_Iu /TSGR3_84/Docs/ [retrieved on 2014-05-24]**
- **KPN B V ET AL: "Importance of load information exchange in energy saving", 3GPP DRAFT; R3-103694, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jacksonville, USA; 20101115, 19 November 2010 (2010-11-19), XP050496837, [retrieved on 2010-11-19]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 160 192 B1

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the term small cells generically for cells that are smaller than macrocells. One way to establish a small cell is to provide a small cell base station that operates within a relatively limited range within the coverage area of a macrocell. One example of use of a small cell base station is to provide wireless communication coverage within a building.

The small cell base station is of a relatively low transmit power and hence each small cell is of a small coverage area compared to a macrocell. A typical coverage range of small cells, for example of the type known as femtocells, is tens of metres.

Small cell base stations often have auto-configuring properties so as to support plug-and play deployment for example in which small cell base stations may integrate themselves into an existing macrocell network so as to connect to the core network of the macrocell network.

One known type of small cell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the small cell base station to the Internet and hence the core network. The DSL allows voice calls and other services provided via the small cell base station to be supported. The small cell base station includes a radio frequency (RF) transceiver connected to an antenna for radio communications.

Widespread deployments of small cell base stations (often simply denoted small cells) will be needed to cope with the exponential growth in demand for wireless communication network capacity in coming years.

This will likely cause a dramatic increase in the total energy consumed in wireless communication networks, since energy consumption in a wireless communication network is mostly in its radio access network. In addition to the possible negative environmental impact, an increase in energy consumption may well also increase costs.

In order to improve the energy efficiency of wireless networks, small cell base stations may be placed into a low power sleep mode during quiet periods, whereby temporarily unneeded parts of the hardware of the small cell base station are powered down. This is likely to reduce considerably the total energy consumption of wireless networks having wide-scale small cell deployments, with studies showing reductions of up to 60%, see for example I. Ashraf, F. Boccardi, L. Ho, "Sleep mode techniques for small cell deployments," IEEE Communications Magazine, vol. 49, no. 8, pp 72-79, August 2011.

With the rising importance of distributing small cell base stations increasingly densely, for example to provide Fifth Generation (5G) networks, energy-saving sleep modes may become even more important. Energy-saving sleep modes will be a significant feature of wireless networks in which ultra-dense deployments of small cell base stations become a reality.

There are known techniques that aim at improving energy efficiency in small cells through the use of low power modes, for example sleep modes.

One approach is to use fast dynamic power amplifier (PA) switching to perform microcell Discontinuous Transmission, also known as Cell DTX, see for example: P. Frenger, P. Moberg, J. Malmodin, Y. Jading, and I. Gódor, "Reducing Energy Consumption in LTE with Cell DTX," in Proc. IEEE VTC-Spring 2011, GreeNet workshop, Budapest, May 2011. This approach basically aims at decreasing the energy consumption of the power amplifier through the use of "micro sleeps" when there are empty transmission time intervals in the order of milliseconds, for example during empty Long Term Evolution (LTE) frames. However, the cell still essentially operates as normal, remaining active and available to provide coverage. In this approach one challenge is to use scheduling to create longer empty transmission time intervals. These are distinct from the sleep modes described above, in which the small cells are shut down and so unavailable for much longer periods, and can therefore be considered a different technical area. In any case, in small cells with low transmit powers such as femtocells, the power amplifier is typically not the largest contributor to hardware power consumption, and longer deep sleep modes where other parts of the hardware with higher power consumption may be switched off are often more effective.

For long sleep modes, the techniques that have been proposed to manage the transition between small cell sleep and active modes can be classified into three types: small-cell-controlled, network-controlled and user-equipment (UE)-controlled. As is well known in wireless cellular communications systems, a mobile user terminal is often referred to as a User Equipment, UE.

In small-cell-controlled and UE-controlled techniques, the sleep modes are managed based on the detection of a UE in close proximity to a small cell.

One way this detection is done is by the small cell detecting uplink transmissions from UEs in active mode that are connected to the macrocell. This is known as sniffing and is small cell controlled involving a low power detector (sniffer) at the small cell base station.

Another way is by UEs broadcasting wake-up signals, those signals being detected and reacted to by any small cells within the range of the UE. This approach is considered UE-controlled.

Both small-cell-controlled and UE-controlled techniques require the small cell to retain the capability to receive radio signals, which increases the energy consumption of the small cell base station in a sleep mode. For UE-controlled techniques, changes to the standards are also required both on the user equipment (UE) and the base station to implement this feature.

In network-controlled techniques, transition of a small cell between sleep and active modes is controlled by a central controller via the backhaul using a wake-up control message. The backhaul is, of course, the (usually wired) network which connects base stations. Network-controlled techniques benefits from making coordinated centralized decisions, where and information from neighbouring cells can be used. For background on known network-controlled techniques the reader may refer to, for example, the paper by A. Prasad, A. Maeder, C. Ng, entitled "Energy Efficient Small Cell Activation Mechanism for Heterogeneous Networks," in Proc. IEEE Globecom 2013, Atlanta, Dec 2013, and the paper by Y. Qu, Y. Chang; Y. Sun; D. Yang entitled "Equilibrated Activating Strategy with Small Cell for Energy Saving in Heterogeneous Network," in Proc. IEEE VTC-Fall 2014, Vancouver, Sept. 2014.

Further to the above, there are known techniques which additionally require location information of the UEs and base stations, see for example E. Ternon, P. Agyapong, L. Hu, A. Dckorsy, "Energy Savings in Heterogeneous Networks with Clustered Small Cell Deployments," in Prox. IEEE ISWCS 2014, Barcelona, August 2014.

Further technical background is provided by the following documents:

"3rd Generation Partnership Project; Technical Specification Group Radio Access Network; Evolved Universal Terrestrial Radio Access (E-UTRA); Study on Energy Saving Enhancement for E-UTRAN (Release 12)", 3GPP DRAFT; R3-141502, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX; FRANCE, 24 May 2014 (2014-05-24), XP050821568

US 2012/307780 A1 (MOCHIZUKI MITSURU [JP] ET AL) 6 December 2012 (2012-12-06)

KPN B V ET AL: "Importance of load information exchange in energy saving", 3GPP DRAFT; R3-103694, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, vol. RAN WG3, no. Jacksonville, USA; 20101115, 19th November 2010 (2010-11-19), XP050496837

## Summary

The reader is referred to the appended independent claims. Some preferred features are laid out in the dependent claims.

The invention is defined in the appended set of claims. The embodiments and/or examples of the following description which are not covered by the appended claims are considered as not being part of the present invention.

An example of the present invention is a telecommunication controller configured for connection with multiple small cell base stations, the controller comprising:

a received power estimation stage configured to calculate from determined signal attenuations between the small cell base stations, for each of a plurality of

a comparison stage configured to compare said pilot signal powers expected to be received at the other small cell base stations to a minimum received power threshold;

a selector stage configured to select, from among the plurality of subsets of small cell base stations, the smallest subset that, or one of the smallest subsets that, provides pilot signal power above the threshold at each of the other small cell base stations; and

an instruction stage configured to send an instruction to each small cell base station in that subset to remain permanently in active mode.

In preferred embodiments, the or each smallest subset that provides pilot signal power above the threshold at the other small cell base stations is one having the fewest number of small cell base station members that provides said pilot signal power.

Preferred embodiments provide centralised management of energy-efficient sleep modes, for example in enterprise small cell networks.

Preferred embodiments address the problem of how to manage sleep modes in enterprise femtocell deployments. This is by identifying which femtocell base stations in a group of enterprise femtocell base stations are to transition between active and sleep modes, and performing readjustments of the coverage of active cells to compensation for cells going to sleep in order to avoid coverage holes and traffic congestion.

Preferred embodiments manage the transition of femtocells between active and sleep modes for a group of enterprise femtocells whilst maintaining continuous coverage and preventing overloading of the remaining active femtocells.

Preferred embodiments implement sleep modes in small cells in a way that ensures coverage is maintained and overload conditions at neighbouring small cells does not result. In some embodiments, high level standardised measurements and parameters are used which are readily available being defined in the TR-069 protocol used by small cell management platforms.

Preferred embodiments are multi-vendor small cell deployments. This is in contrast to known approaches which require large numbers of measurement reports from user terminals to be collected and processed which is computationally intensive and results in large signalling overheads, in consequence of which the measurement data is difficult to handle and limits use to vendor-specific self-organising networks.

Preferred embodiments do not require collection of measurements made by user terminals so avoid the associated intensive computing and signalling.

Preferably the telecommunication controller further comprises a receiver configured to receive measured data of the levels of a pilot signal sent from each of the small cell base stations and received at other of the small cell base stations; and a processor configured to determine from the measured data the signal attenuations between the small cell base stations.

Preferably upon the selector stage determining more than one of the smallest subsets as providing pilot signal power above the threshold at the other small cell base stations, the selector stage select that one of the smallest subsets that provides pilot signal power most above the threshold at the other small cell base stations.

Preferably the minimum received power threshold is set as the received power of a signal expected at one of the base station when the corresponding received power of the signal at its coverage cell edge away from the neighbouring base station transmitting the signal is at a minimum receivable power level.

Preferably in use after sending of the instruction to each small cell base station in the selected subset to remain permanently in active mode, upon traffic load on any one of the small cell base stations in active mode going below a given amount, determinations are made as to whether: the small cell base station is one on the selected subset to remain permanently in active mode, and the traffic load on one or more neighbouring small cell base stations would exceed a given level were the small cell base station to be put into sleep mode; and the base station is put into sleep mode provided the small cell base station is not one on the selected subset to remain permanently in active mode and the traffic load on neighbouring small cell base stations should the small cell base station be put into sleep mode would not exceed a given level.

Preferably in use after sending of the instruction to each small cell base station in the selected subset to remain permanently in active mode, upon traffic load on any one of the small cell base stations in active mode exceeding a second given amount, a determination is made as to whether that the small cell base station has a neighbouring small cell base station in sleep mode; and upon determining that the small cell base station has a neighbouring small cell base station in sleep mode, the neighbouring base station is put into active mode.

Preferably the telecommunication controller is configured to adjust the transmission powers of the small cell base stations in active mode dependent upon which of the small cell base stations are in active mode.

Examples of the present invention also relates to a corresponding method, and a network including the telecommunication controller.

Another example of the present invention relates to a method of controlling multiple small cell base stations, the method comprising:

calculating from determined signal attenuations between the small cell base stations, for each of a plurality of subsets of the small cell base stations transmitting a pilot signal at a given power, the pilot signal powers expected to be received at the other small cell base stations;

comparing said pilot signal powers expected to be received at the other small cell base stations to a minimum received power threshold;

selecting, from among the plurality of subsets of small cell base stations, the smallest subset that, or one of the smallest subsets that, provides pilot signal power above the threshold at each of the other small cell base stations; and instructing each small cell base station in that subset to remain permanently in active mode.

Preferably the method further comprises receiving measured data of the levels of a pilot signal sent from each of the small cell base stations and received at other of the small cell base stations; and determining from the measured data the signal attenuations between the small cell base stations.

Preferably upon determining more than one of the smallest subsets as providing pilot signal power above the threshold at the other small cell base stations, that one of the smallest subsets is selected that provides pilot signal power most above the threshold at the other small cell base stations.

Preferably the minimum received power threshold is set as the received power of a signal expected at one of the base stations when the corresponding received power of the signal at its coverage cell edge away from the neighbouring base station transmitting the signal is at a minimum receivable power level.

Preferably after sending of the instruction to each small cell base station in the selected subset to remain permanently in active mode, upon traffic load on any one of the small cell base stations in active mode going below a given amount, determinations are made as to whether: the small cell base station is one on the selected subset to remain permanently in active mode, and the traffic load on one or more neighbouring small cell base stations would exceed a given level were the small cell base station to be put into sleep mode; and the base station is put into sleep mode provided the small cell base station is not one on the selected subset to remain permanently in active mode and the traffic load on neighbouring small cell base stations should the small cell base station be put into sleep mode would not exceed a given level.

Preferably after sending of the instruction to each small cell base station in the selected subset to remain permanently in active mode, upon traffic load on any one of the small cell base stations in active mode exceeding a second given amount, a determination is made as to whether that the small cell base station has a neighbouring small cell base station in sleep mode; and upon determining that the small cell base station has a neighbouring small cell base station in sleep mode, the neighbouring base station is put into active mode.

Preferably transmission powers of the small cell base stations in active mode are adjusted dependent upon which of the small cell base stations are in active mode.

## Brief Description of the Drawings

An embodiment of the present invention will now be described by way of example and with reference to the drawings, in which:

Figure 1 is a diagram illustrating an example group of small cell base stations, more specifically femtocells, connected to a central controller according to a first embodiment;
Figure 2 is a diagram illustrating the selection of target minimum RSRP level so as to maintain coverage by the group of femtocells shown in Figure 1,
Figure 3 is a diagram illustrating in more detail, as a floor plan, how the femtocells shown in Figure 1 are deployed in an enterprise environment,
Figure 4 is a diagram showing in more detail the central controller shown in Figure 1,
Figure 5 is a diagram illustrating in more detail how the target minimum RSRP level is determined for the group of femtocells shown in Figure 1,
Figure 6 is a diagram illustrating the method of selection of which of the femtocells in the group shown in Figure 1 are to be in permanently active mode, and
Figure 7 is a diagram illustrating the subsequent method of altering modes of operation of the femtocells dependent on traffic load.

## Detailed Description

Considering the known approaches, the inventors realised that the process of putting small cell base stations into sleep mode should preferably be performed in a way that does not result in disruption to the service provided by the network. For example, considering small cells of enterprise femtocell type, in indoor enterprise femtocell deployments, a cluster is provided of femtocell base stations placed throughout a building to provide improved coverage, better quality of service and, in some cases, customized services and applications to registered users. In this situation, the sleep modes in enterprise femtocells should preferably be implemented in such a way that coverage is ensured, and sufficient capacity is maintained within the building, but no significant negative effect is introduced to outdoor cellular network.

When considering known approaches, the inventors realised that both known small-cell-controlled and known UE-controlled techniques require the small cell to retain the capability to receive radio signals, which increases the energy consumption of the small cell base station in a sleep mode. They realised that because the decision whether to trigger sleep mode or an active mode is made in response to local information, namely the proximity of active users to the small cell, a more informed decision that considers the impact on coverage and load of neighbouring cells is not be made.

Considering the known approaches, the inventors also realised that although known network-controlled techniques benefit from making coordinated centralized decisions in which information from neighbouring cells may be used, known network-controlled techniques rely on the availability of detailed information, such as UE measurements such as Reference Signal Received Power (RSRP) or Channel Quality Indicator (CQI) reports. The inventors realised that while access to this UE-provided information enables the network to be better optimised as regards which small cell base stations are in sleep mode and when, this information is difficult to obtain in multi-vendor network deployments. The inventors realised that as these UE measurements are used mainly for low-level physical layer operations such as radio resource scheduling and handover initiation, these measurements are typically not collected nor made available for use in networks, such as Self Organising Networks (SON), which have a central controller, unless specifically implemented. The inventors also realised that processing of these UE reports requires significant computational resources and signalling overhead as the amount of data involved is large.

Furthermore, considering the known approach described in the paper by Ternon and others mentioned above, the inventors realised that this known technique requires location information of the UEs and base stations so is impractical today due to the large amounts of signalling overhead involved; and, if GPS functionality is used, have a detrimental impact on the UE’s battery life. Location information indoors, where GPS is not available, is also of in sufficient accuracy.

The inventors also realised that in known enterprise femtocell deployments, the femtocell base stations are deployed in a group to provide continuous coverage throughout a building. This may lower the number of handovers between femtocells and macrocell, provides better quality of experience, and maintains the accessibility of localized femtocell applications and services to users, should such applications or services be available. The inventors realised however that these known approaches do not consider preserving continuous network coverage, so fragmented femtocell coverage in the building may result.

The inventors realised that an alternative was possible, and example of which is described below.

## The Femtocell network

As shown in Figure 1, a group 12 of femtocell base stations 14 are each connected to a central controller 16 via a standard interface 18.

The femtocell base stations 14 each have a ’sniffing’ capability, namely a sniffer receiver (not shown) to perform measurements of received pilot signal levels of neighbouring cells. In this example in which the femtocell base stations 14 are Long Term Evolution (LTE) femtocell base stations , the measured pilot signal level is denoted Reference Signal Received Power (RSRP).

In use, the femtocell base stations 14 are able to send their RSRP measurements, load information, and reference signal transmit powers to the central controller 18. The central controller 18 instructs selected various of the femtocell base stations 14 in the group 12 to enter or exit sleep modes and to change their reference signal transmit powers.

Operation is in two stages. First there is an initial configuration stage. Secondly there is a dynamic stage. These are described in turn below.

## Initial Configuration Stage

In this stage (in other words, period or phase) it is determined which of the group 12 of femtocell base stations 14 should be in a permanently active mode, in other words cannot be put into a sleep mode, in order to maintain a target minimum RSRP level at all femtocell base station 14 locations.

In outline this stage includes the following steps:

As shown in Figure 2 upper part, with all femtocell base stations 14 active and transmitting at their maximum reference signal transmit powers, the femtocell base stations 14 are instructed to each use their sniffing functionality to measure the RSRP 20’, 20" of the neighbouring other femtocells 14", 14’’’ of the group that the femtocell base station 14’ can detect, and send the information to the central controller 18.

When all this RSRP sniffing measurement data is collected, the central controller 18 uses this information, along with information on the transmit powers of each femtocell base station 14’ to estimate the path losses (in other words signal attenuations) between each femtocell 14 and its respective neighbours 14", 14’’’. In other words, with this path loss (attenuation) information, the RSRP levels of the femtocell base station 14 transmitting at its maximum power are estimated by the central controller 18 at the locations of its neighbouring femtocell base stations 14", 14’’’.

Using this RSRP estimation, the lowest number of femtocell base stations 14, and their minimum transmit powers needed to satisfy a target minimum femtocell RSRP level at all of the femtocell base stations locations, are calculated by the central controller 18. These specific femtocell base stations 14' are designated as "permanent" femtocell base stations in the sense they are as a practical matter to be kept in active mode, for example until a system re-boot.

The target minimum femtocell RSRP level is chosen to maintain the original coverage area even after the other ("non-permanent") femtocell base stations 14",14'" in the group are put into sleep mode, as illustrated in Figure 2.

As shown in Figure 2 lower part, $RSRP_{base}$ is the level at which communication with a user terminal at the coverage area edge 28 is possible, and the target minimum RSRP level, is the minimum RSRP level at the location of the nearest femtocell base station 14", 14'" that provides $RSRP_{base}$ at the coverage area edge 28 and so enables this communication. How the target minimum RSRP level (sometimes denoted $RSRP_{target}$) is determined is described in more detail below.

We will now further describe the network, then consider these steps in more detail.

More detail about the network

The example network shown in Figure 1 is shown in more detail in Figure 3.

Figure 3 shows the locations of the group 12 of femtocell base stations 14 deployed in an enterprise 30 in a part of an office building 32 with, in this example, seven femtocell base stations 14 placed roughly 20metres apart. A scale in metres (in x and y directions) is shown for ease of reference. In Figure 3, the black dots designated 1, 2, 3, 4, 5, 6, 7 represents the locations of the femtocell base stations 14, and the black lines shows walls of the building 32.

The femtocell base stations are managed by the central controller (not shown in Figure 3).

In this example, the central controller 18 is an Alcatel-Lucent Motive Home Device Manager (HDM), and the interface 16 used is the Broadband Forum (BBF) TR-069 device management protocol with the TR-196 Femto Access Point Service Data. For the interested reader further information on the interface may be found at: Model Broadband Forum, FAPService: 2.0 Femto Access Point Service Data Model, http://www.broadband-forum.org/cwmp/tr-196-2-0.html.

As shown in Figure 4, the controller 18 may be considered as made up of various functional stages or elements (In some embodiments, at least some of these stages or elements are circuits).

Specifically there is an RSRP data receiver 40 connected to a path loss calculator 42 which is connected to a determination stage 44 as to which of the femtocell base stations 14 in the group 12 are to be kept in active mode. This stage 44 uses as an input an $RSRP_{target}$ level from a level determination stage 46. The controller 18 also includes a load determination stage 48 that determines the traffic loading on the femtocell base stations and is connected to a wake-up/put-to-sleep control stage 50. Operation is explained below.

Determining $RSRP_{target}$

Figure 5 illustrates how $RSRP_{target}$ is calculated.

As shown in Figure 5, femtocell base station denoted Femto1, which is located at position A, remains active. Femtocell base station denoted Femto2, which is located at position B is put into sleep mode. The distance between Femto1 and Femto2 is *d* metres. $RSRP_{base}$ is the receive sensitivity level of pilot signal, and defines the edge 34 of a femtocell base station's coverage area 36. The aim is to calculate the RSRP level of Femto1 at position B such that the RSRP level at position C is equal to $RSRP_{base}$. In other words, in order to preserve the coverage when Femto2 enters sleep mode, Femto1 has to be able to set its power to ensure that its coverage reaches 2**d* meters away.

Referring to Figure 5, to approximate the path loss between Femto1 and Femto2, a free space path loss model plus a 20dB wall penetration loss is assumed. The free space path loss between B and C ($FSPL_{BC}$) in dB is given as the difference between the path loss between A and C ($FSPL_{AC}$) and A and B ($FSPL_{AB}$)

$$\begin{aligned} FSPL_{BC} &= FSPL_{AC} - FSPL_{AB} \\ &= (20\log_{10}(2d) - 138.25) - (20\log_{10}(d) - 138.25) \\ &= 20\log_{10}(2) \\ &= 6.02 \text{ dB} \end{aligned}$$

If $RSRP_{base}$ is assumed to be -120 dBm, and a wall penetration loss of 20 dB, $RSRP_{target}$ is calculated as

$$RSRP_{target} = RSRP_{base} - (6.02 + 20) = -94 \text{ dBm}$$

Measurement of RSRPs

Each of the group 12 of femtocell base stations 14 uses its own sniffing functionality to measure the RSRP of its neighbouring femtocell base stations 4 from within the group and reports these measurements to the central controller.

With knowledge of the reference signal transmit powers also, the central controller calculates the path losses between each femtocell base station and its neighbours, as shown in Table 1 below. In Table 1, entries for neighbours that are undetectable due to their RSRP being below the receive sensitivity are labelled as not available (N/A), and path loss values are shown in dB. F1 denotes the femtocell base station at location 1 as shown in Figure 3, F2 denotes the femtocell base station at location 2 as shown in Figure 3, and so on.

By the way, within the TR-069 protocol, the relevant parameters used to obtain information on the RSRP and reference signal powers are respectively:

FAPService. {i} .REM.LTE.Cell. {i} .RF.RSRP and
FAPService. {i} .CellConfig.RAN.RF.ReferenceSignalPower

Table 1: Path loss between femtocell BSs, derived from RSRP measurements and reference signal transmit powers.

| Cell index | $F_1$ | $F_2$ | $F_3$ | $F_4$ | $F_5$ | $F_6$ | $F_7$ |
|---|---|---|---|---|---|---|---|
| $F_1$ | | -84.6631 | -100.588 | -72.4965 | -100.744 | N/A | -85.0894 |
| $F_2$ | -84.6631 | | -85.3893 | -114.566 | -81.5537 | N/A | -101.842 |
| $F_3$ | -100.588 | -85.3893 | | - 100.821 | N/A | - 60.5578 | N/A |
| $F_4$ | -72.4965 | -114.566 | -100.821 | | -106.232 | -89.5947 | -73.3648 |
| $F_5$ | - 100.744 | 81.5537 | N/A | -106.232 | | -85.7171 | -85.0422 |
| $F_6$ | N/A | N/A | -60.5578 | -89.5947 | -85.7171 | | -99.1665 |
| $F_7$ | - 85.0894 | -101.842 | N/A | -73.3648 | -85.0422 | -99.1665 | |

Using the path loss information shown in Table 1, the permanent femtocells are determined by the central controller as will be explained below. The central controller indentifies which femtocell base stations 14 of the group 1 2 are needed to be permanently in active mode to ensure that the RSRP level at all femtocell base station locations is higher than a target RSRP level, $RSRP_{target}$ and the number of such permanently active mode femtocells is as few as possible to achieve this. This is explained in detail below.

Estimation of RSRP at neighbours for each femtocell using its maximum reference transmit power

Using the path loss information shown in Table 1, and assuming that the maximum reference signal transmit power is -4.7 dBm, the predicted RSRP measurements of each cell at its neighbours location if the maximum reference signal transmit power is used is calculated, and is shown in Table 2.

Table 2: Estimated RSRP of femtocell base stations at their neighbour's locations assuming maximum reference transmit powers are used.

| Cell index | $F_1$ | $F_2$ | $F_3$ | $F_4$ | $F_5$ | $F_6$ | $F_7$ |
|---|---|---|---|---|---|---|---|
| $F_1$ | | -89.4446 | -105.37 | -77.278 | -105.526 | N/A | -89.8709 |
| $F_2$ | -89.4446 | | -90.1708 | -119.348 | -86.3352 | N/A | -106.624 |
| $F_3$ | -105.37 | -90.1708 | | -105.603 | N/A | -65.3393 | N/A |
| $F_4$ | -77.278 | -119.348 | -105.603 | | -111.014 | -94.3762 | -78.1463 |
| $F_5$ | - 105.526 | -86.3352 | N/A | -111.014 | | -90.4986 | -89.8237 |
| $F_6$ | N/A | N/A | -65.3393 | -94.3762 | -90.4986 | | -103.948 |
| $F_7$ | - 89.8709 | -106.624 | N/A | -78.1463 | -89.8237 | -103.948 | |

Determining permanent femtocells from this estimated RSRP data

Figure 6 shows a flow chart of how the permanent femtocells are determined, using a global search procedure.

The procedure involves the following steps:

Set (step a) the number of permanent femtocells, $N_P$, to 1.

Determine (step b) the different permanent femtocell combinations possible. In the example scenario above, the total number of femtocells is seven. So, if Np is 1, the total number of combinations is seven, i.e. $\{\{F_1\},\{F_2\},\{F_3\},\{F_4\},\{F_5\},\{F_6\},\{F_7\}\}$.

For each set of permanent femtocell combinations, the estimated RSRP level received at each non-permanent femtocell location is calculated (step c).

A determination is made (step d) as to whether or not an active cell combination results in the RSRP at all of the femtocell base stations being above $RSRP_{target}$. If a permanent femtocell combination results in all RSRP levels at each femtocell location being higher than $RSRP_{target}$(step e), the search is stopped (step f) as the femtocells to be set as permanently in active mode have been identified .

On the other hand, if there is an RSRP level at a femtocell location which is not higher than $RSRP_{target}$ (step g), then the number of permanent femtocells, $N_P$ is increased by 1 (step h), and a check is made (step i) as to whether $N_P$ is the same as the total number of femtocells. If no (step j) steps (b) to (d) are repeated.

If at step i, it is determined (step k) that $N_P$ is the same as the total number of femtocells, this means that no femtocell base stations can be put into sleep mode, and the search is stopped (step f).

By the way, in this example, f $N_P$ is 2, the total number of combinations is twenty- one i.e.$\{\{F_1,F_2\},\{F_1,F_3\},\{F_1,F_4\},...,\{F_4,F_7\},\{F_5,F_7\},\{F_6,F_7\}\}$. If $N_P$ is 3, the total number of combinations is 35, i.e. $\{\{F_1, F_2,F_3\},\{F_1, F_2, F_4\},\{F_1, F_2, F_5\},...,\{F_4, F_5, F_7\},\{F_4, F_6, F_7\},\{F_5, F_6, F_7\}\}$, and so on.

Selection

In the example scenario, the search using the estimated RSRP data of Table 2 resulted in two possible combinations of femtocells to be permanently kept on active mode: femtocells $F_1$ and $F_6$, and femtocells $F_3$ and $F_7$. Table 3 shows the estimated RSRP at each femtocell when each of these two combinations is used. Both combinations provide all the other femtocells with an RSRP level higher than $RSRP_{target}$, which in this example is -94 dBm.

In this example, the $F_3$ and $F_7$ combination is chosen, as its lowest RSRP level (-90.17 dBm at $F_2$) is higher than the lowest RSRP level (-90.5 dBm at $F_5$) of the $F_1$ and $F_6$ combination. Of course, the coverage of the office area provided by these selected permanent femtocell base stations being active has no gaps in coverage.

| | | 'Permanent' femtocell combination | |
|---|---|---|---|
| | | $F_1$ and $F_6$ | $F_3$ and $F_7$ |
| Femtocell index | $F_1$ | | -89.8709 |
| | $F_2$ | -89.4446 | -90.1708 |
| | $F_3$ | -65.3393 | |
| | $F_4$ | -77.278 | -78.1463 |
| | $F_5$ | -90.4986 | -89.8237 |
| | $F_6$ | | -65.3393 |
| | $F_7$ | -89.8709 | |

Table 3: Outcome of permanent femtocell search – estimated RSRP at the other femtocell base stations.

Dynamic Stage

Once the femtocell base stations which are to be kept permanently on have been identified, the network starts a procedure under the control of the central controller 18 of selectively switching femtocell base stations between active mode and sleep mode dependent upon traffic loading. This is, of course, subject to all the femtocell base stations that were determined as to be permanently in active mode being maintained in active mode.

In other words, once the "permanent" femtocells have been identified, a dynamic sleep mode procedure is initiated. This is known as the dynamic phase or dynamic stage.

During the normal operation of the femtocell network, information as to the traffic load on each of the femtocells 14 are monitored by the central controller 18.

If a load on a femtocell base station is low (i.e. below a threshold) for a given period of time, that femtocell base station becomes a candidate for sleep mode. However a decision to put that femtocell base station into sleep mode is made only if:

1. it is not a permanent femtocell,
2. the load on its active neighbours if the femtocell base station were put into sleep mode is to below a calculated threshold. This second step ensures that putting a candidate femtocell base station to sleep will not cause overloading to the surrounding femtocells.

The candidate femtocell's neighbours are determined based on the path loss estimations performed in the initial configuration stage, i.e. they are "near" in terms of having a low path loss with the candidate cell (rather than by determining geographical location).

If the candidate femtocell base station satisfies the two criteria above, the transmit powers of its neighbours needed to maintain the minimum RSRP level at the candidate cell's base station location is calculated and set, and the instruction to enter sleep mode is then sent to the candidate cell.

Conversely, if a femtocell load is excessive (i.e. above a threshold) for a given period of time, and it has neighbours that are sleeping, the sleeping neighbour with the lowest path loss is instructed to enter active mode.

This approach is shown in more detail in Figure 7.

As shown in Figure 7, the central controller 18 acts to gather (step m) load information in respect of the various femtocell base station that are in active mode for a given period.

Upon it being determined (step n) that a neighbouring femtocell base station to any sleeping mode femtocell base stations has a load which is excessive (its load is greater than or equal to a threshold $L_{upper)}$, a candidate sleeping mode femtocell base station is sought (step o) for possible 'wake up' i.e. transfer into active mode. If one is identified (step p), that candidate femtocell base station is transferred (step q) to active mode and the transmission powers of the femtocell base stations are adjusted accordingly.

On the other hand, if no candidate femtocell base station for 'wake up' is identified, the process shifts to determining (step s) whether any of the currently active mode femtocell base stations are such that:

its load is less than a lower load threshold $L_{lower}$,
is not a femtocell base station identified in the initial configuration stage as to be permanently in active mode, and
all of whose neighbouring femtocell base stations have a load less than or equal to the upper load threshold $L_{upper}$.

If it is determined (step u) that such active mode femtocell base station is found (step t), the one which is selected as the candidate to be put in sleep mode is transferred to sleep mode (step v) and the transmit powers of the remaining-active mode femtocell base stations are to adjusted(step w) to avoid having a coverage gap.

<u>Example of this dynamic stage operation</u>

In the dynamic stage, the load information of each femtocell is used to trigger transitions between sleep and active modes. Two load thresholds are used: the lower threshold $L_{lower}$ and the upper threshold $L_{upper}$.

In this example, a load is considered as the number of active users, and $L_{lower}$ is 2 users, and $L_{upper}$ is 15 users.

<u>Transition from active to sleep mode</u>

Considering the coverage areas of the femtocells in the example office scenario (Figures 1 and 3), with all femtocell base stations 14 active and their pilot power levels set to provide coverage within the building 30, Table 4 shows an illustrative example of the load of each femtocell base station in terms of the maximum number of active users over a period of time. Femtocells $F_5$ and $F_7$ both have loads below $L_{lower}$, and are therefore candidates for sleep mode. As $F_7$ has previously been selected as a permanent femtocell, it does not satisfy the criteria for transition into sleep mode. $F_5$, however, is not a permanent femtocell, and all its neighbouring cells ($F_1$, $F_2$, $F_3$, $F_4$, $F_7$) are between them capable of being loaded with all of $F_5$'s users without causing their load to exceed $L_{upper}$. After satisfying the two criteria, $F_5$ is instructed to transition into sleep mode.

Table 4. Example of femtocell load before and after transition from active to sleep mode is triggered.

| Femtocell index | $F_1$ | $F_2$ | $F_3$ | $F_4$ | $F_5$ | $F_6$ | $F_7$ |
|---|---|---|---|---|---|---|---|
| Load before transition to sleep mode [users] | 6 | 5 | 4 | 7 | 2 | 5 | 1 |
| Load after transition to sleep mode [users] | 5 | 7 | 4 | 7 | - | 5 | 2 |

If $F_5$ were put into sleep mode, without adjustments to neighbouring femtocell's pilot powers, which would leave coverage holes. So, prior to $F_5$ being put to sleep, the transmit powers of at least one of its neighbours has to be adjusted to compensate for this. This is done by firstly identifying the $F_5$'s nearest neighbour using the path loss information as shown in Table 1, and readjusting the identified neighbour's transmit power such that the estimated RSRP of the neighbour at $F_5$'s location is equal or higher than $RSRP_{target}$. In this example, $F_5$'s nearest neighbour is $F_2$, and readjustment of $F_2$'s power is undertaken.

<u>Transition from sleep to active mode</u>

If a femtocell's load exceeds $L_{upper}$ and it has a neighbouring cell that is in sleep mode, then this triggers the transition from sleep to active mode. For example, in Table 5 $F_7$'s load is larger than $L_{upper}$, and one of its neighbours,

$F_5$, is in sleep mode. This triggers $F_5$ to transition into active mode, and the pilot transmit powers are reconfigured to the original configuration.

Table 5. Example of femtocell load before and after transition from sleep mode to active mode is triggered.

| Femtocell index | F1 | F2 | F3 | F4 | F5 | F6 | F7 |
|---|---|---|---|---|---|---|---|
| Load before transition to active mode [users] | 5 | 14 | 5 | 10 | - | 5 | 16 |
| Load after transition to active mode [users] | 5 | 11 | | 8 | 9 | 5 | 12 |

It should be noted that the transition between active and sleep modes is done in a way that does not disrupt the service to existing user terminals (UEs). This is done by gradually decreasing/increasing the pilot powers of transitioning femtocells and its relevant neighbours so that the UEs are able to perform handovers as femtocells go to sleep or active mode.

The present invention may be embodied in other specific forms without departing from its essential characteristics. For example, the femtocell base stations each have a ’sniffing’ capability, namely to perform measurements of received pilot signal levels of neighbouring cells, may be wideband Code Division Multiple Access (WCDMA) femtocell base stations, in which the measured pilot signal level is denoted is the Received Signal Code Power (RSCP).

The described embodiments are to be considered in all respects only as illustrative and not restrictive. The scope of the invention is, therefore, indicated by the appended claims rather than by the foregoing description.

## Claims

1. A telecommunication controller (18) configured for connection (16) with multiple small cell base stations, the controller comprising:
a receiver (40) configured to receive measured data of the levels of a pilot signal sent from each of the small cell base stations and received at other of the small cell base stations;

    a processor (42) configured to determine from the measured data the signal attenuations between the small cell base stations;
    a received power estimation means (42) configured to calculate(Fig 6:c) from determined signal attenuations between the small cell base stations, for each of a plurality of subsets of the small cell base stations transmitting a pilot signal at a given power, the pilot signal powers expected to be received at the other small cell base stations;
    a comparison means (44, Fig 6:d) configured to compare said pilot signal powers expected to be received at the other base stations to a minimum received power threshold (46);
    a selector means (44, Fig 6:e,h,i) configured to select, from among the plurality of subsets of small cell base stations, the smallest subset that, or one of the smallest subsets that, provides pilot signal power above the threshold at each of the other small cell base stations; and
    an instruction means (44) configured to send an instruction to each small cell base station in that subset to remain permanently in active mode.

2. A telecommunication controller according to claim 1, in which the selector means is configured to, upon determining more than one of the smallest subsets as providing a pilot signal power above the threshold at the other small cell base stations, select that one of the smallest subsets that provides pilot signal power most above the threshold at the other small cell base stations.

3. A telecommunication controller according to any preceding claim, comprising means (46) to set the minimum received power threshold as the received power of a signal expected at one of the base stations when the corresponding received power of the signal at its coverage cell edge away from the neighbouring base station transmitting the signal is at a minimum receivable power level.

4. A telecommunication controller according to any preceding claim, configured to in use :
after sending of the instruction to each small cell base station in the selected subset to remain permanently in active mode, upon traffic load on any one of the small cell base stations in active mode going below a given amount, make determinations as to whether (Fig 7:s):

the small cell base station is one on the selected subset to remain permanently in active mode, and
the traffic load on one or more neighbouring small cell base stations would exceed a given level were the small cell base station to be put into sleep mode; and put the small base station into sleep mode provided the small cell base station is not one on the selected subset to remain permanently in active mode and the traffic load on neighbouring small cell base stations should the small cell base station be put into sleep mode would not exceed a given level.

**5.** A telecommunication controller according to any preceding claim, configured to:
after sending of the instruction to each small cell base station in the selected subset to remain permanently in active mode, upon traffic load on any one of the small cell base stations in active mode exceeding a second given amount, determine whether that the small cell base station has a neighbouring small cell base station in sleep mode (Fig 7:n); and configured to:
upon determining that the small cell base station has a neighbouring small cell base station in sleep mode, put (Fig 7:q) the neighbouring base station into active mode.

**6.** A telecommunication controller according to claim 4 or claim 5, configured to adjust (Fig 7:q) the transmission powers of the small cell base stations in active mode dependent upon which of the small cell base stations are in active mode.

**7.** A method of controlling multiple small cell base stations, the method comprising a telecommunications controller:

receiving (40) measured data of the levels of a pilot signal sent from each of the small cell base stations and received at other of the small cell base stations;
determining (42) from the measured data the signal attenuations between the small cell base stations;
calculating from determined signal attenuations (42) between the small cell base stations, for each of a plurality of subsets (Fig 6:b) of the small cell base stations transmitting a pilot signal at a given power, the pilot signal powers expected to be received at the other small cell base stations (Fig 6:c);
comparing (Fig 6:d) said pilot signal powers expected to be received at the other small cell base stations to a minimum received power threshold;
selecting (Fig 6:e,h,i), from among the plurality of subsets of small cell base stations, the smallest subset that, or one of the smallest subsets that, provides pilot signal power above the threshold at each of the other small cell base stations; and
instructing (44) each small cell base station in that subset to remain permanently in active mode.

**8.** A method according to claim 7, in which upon the telecommunications controller determining more than one of the smallest subsets as providing a pilot signal power above the threshold at the other small cell base stations, that one of the smallest subsets is selected by the telecommunications controller that provides pilot signal power most above the threshold at the other small cell base stations.

**9.** A method according to claim 7 or claim 8 in which the minimum received power threshold is set (46) by the telecommunications controller as the received power of a signal expected at one of the base stations when the corresponding received power of the signal at its coverage cell edge away from the neighbouring base station transmitting the signal is at a minimum receivable power level.

**10.** A method according to any of claims 7 to 9, in which:
after sending by the telecommunications controller of the instruction to each small cell base station in the selected subset to remain permanently in active mode, upon traffic load on any one of the small cell base stations in active mode going below a given amount, determinations are made by the telecommunications controller as to whether (Fig 7:s):

the small cell base station is one on the selected subset to remain permanently in active mode, and
the traffic load on neighbouring small cell base stations would exceed a given level were the small cell base station to be put into sleep mode; and
the base station is put into sleep mode under instruction from the telecommunications controller provided the small cell base station is not one on the selected subset to remain permanently in active mode and the traffic load on neighbouring small cell base stations should the small cell base station be put into sleep mode would not exceed a given level.

**11.** A method according to any of claims 7 to 10, in which:

after sending by the telecommunications controller of the instruction to each small cell base station in the selected subset to remain permanently in active mode, upon traffic load on any one of the small cell base stations in active mode exceeding a second given amount, a determination is made by the telecommunications controller as to whether that the small cell base station has a neighbouring small cell base station in sleep mode (Fig7:n); and upon determining by the telecommunications controller that the small cell base station has a neighbouring small cell base station in sleep mode, under instruction from the telecommunications controller the neighbouring base station is put (Fig 7:q)into active mode.

**12.** A method according to claim 10 or claim 11, in which transmission powers of the small cell base stations in active mode are adjusted by the telecommunications controller dependent upon which of the small cell base stations are in active mode.

**Patentansprüche**

**1.** Telekommunikationssteuerung (18), die zur Verbindung (16) mit mehreren Kleinzellen-Basisstationen konfiguriert ist, wobei die Steuerung umfasst:

einen Empfänger (40), der so konfiguriert ist, dass er Messdaten der Pegel eines Pilotsignals empfängt, das von jeder der Kleinzellen-Basisstationen gesendet und an anderen der Kleinzellen-Basisstationen empfangen wird;
einen Prozessor (42), der zum Bestimmen der Signaldämpfungen zwischen den Kleinzellen-Basisstationen aus den Messdaten konfiguriert ist;
ein Empfangsleistungsschätzmittel (42), das so konfiguriert ist, dass es aus den bestimmten Signaldämpfungen zwischen den Kleinzellen-Basisstationen für jeden einer Mehrzahl von Teilsätzen der Kleinzellen-Basisstationen, die ein Pilotsignal bei einer gegebenen Leistung senden, die Pilotsignalleistungen berechnet (Fig. 6c), die voraussichtlich an den anderen Kleinzellen-Basisstationen empfangen werden;
ein Vergleichsmittel (44, Fig. 6d), das so konfiguriert ist, dass es die Pilotsignalleistungen, die voraussichtlich an den anderen Basisstationen empfangen werden, mit einer Mindestempfangsleistungsschwelle (46) vergleicht;
ein Auswahlmittel (44, Fig. 6e, h, i), das so konfiguriert ist, dass es aus der Mehrzahl von Teilsätzen von Kleinzellen-Basisstationen den kleinsten Teilsatz oder einen der kleinsten Teilsätze auswählt, der Pilotsignalleistung über der Schwelle an jeder der anderen Kleinzellen-Basisstationen bereitstellt; und
ein Anweisungsmittel (44), das so konfiguriert ist, dass es eine Anweisung an jede Kleinzellen-Basisstation in diesem Teilsatz sendet, dauerhaft in einem aktiven Modus zu bleiben.

**2.** Telekommunikationssteuerung nach Anspruch 1, wobei das Auswahlmittel so konfiguriert ist, dass es bei Bestimmen von mehr als einem der kleinsten Teilsätze, die eine Pilotsignalleistung über der Schwelle an den anderen Kleinzellen-Basisstationen bereitstellen, den einen der kleinsten Teilsätze auswählt, der Pilotsignalleistung an den anderen Kleinzellen-Basisstationen bereitstellt, die am höchsten über der Schwelle liegt.

**3.** Telekommunikationssteuerung nach einem der vorhergehenden Ansprüche, umfassend Mittel (46) zum Einstellen der Mindestempfangsleistungsschwelle als die Empfangsleistung eines Signals, das an einer der Basisstationen erwartet wird, wenn die entsprechende Empfangsleistung des Signals an ihrem Versorgungszellenrand entfernt von der benachbarten Basisstation, die das Signal sendet, auf einem empfangbaren Mindestleistungspegel ist.

**4.** Telekommunikationssteuerung nach einem der vorhergehenden Ansprüche, die in Verwendung konfiguriert ist zum: Vornehmen, wenn die Verkehrslast an einer der Kleinzellen-Basisstationen im aktiven Modus nach dem Senden der Anweisung an jede Kleinzellen-Basisstation im ausgewählten Teilsatz, dauerhaft im aktiven Modus zu bleiben, unter ein gegebenes Maß abfällt, von Bestimmungen im Hinblick darauf, ob (Fig. 7s):

die Kleinzellen-Basisstation eine in dem ausgewählten Teilsatz ist, der dauerhaft im aktiven Modus bleiben soll, und
die Verkehrslast an einer oder mehreren benachbarten Kleinzellen-Basisstationen ein gegebenes Niveau überschreiten würde, wenn die Kleinzellen-Basisstation in den Schlafmodus versetzt würde; und
Versetzen der Kleinzellen-Basisstation in den Schlafmodus, vorausgesetzt, dass die Kleinzellen-Basisstation nicht eine im ausgewählten Teilsatz ist, der dauerhaft im aktiven Modus bleiben soll, und die Verkehrslast an den benachbarten Kleinzellen-Basisstationen nicht ein gegebenes Niveau überschreiten würde, sollte die Kleinzellen-Basisstation in den Schlafmodus versetzt werden.

5. Telekommunikationssteuerung nach einem der vorhergehenden Ansprüche, die konfiguriert ist zum:
Bestimmen, wenn die Verkehrslast an einer der Kleinzellen-Basisstationen im aktiven Modus nach dem Senden der Anweisung an jede Kleinzellen-Basisstation im ausgewählten Teilsatz, dauerhaft im aktiven Modus zu bleiben, ein zweites gegebenes Maß überschreitet, ob diese Kleinzellen-Basisstation eine benachbarte Kleinzellen-Basisstation im Schlafmodus aufweist (Fig. 7n), und konfiguriert ist zum:
Versetzen (Fig. 7q) bei Bestimmen, dass die Kleinzellen-Basisstation eine benachbarte Kleinzellen-Basisstation im Schlafmodus aufweist, der benachbarten Basisstation in den aktiven Modus.

6. Telekommunikationssteuerung nach Anspruch 4 oder 5, die so konfiguriert ist, dass sie die Sendeleistungen der Kleinzellen-Basisstationen im aktiven Modus in Abhängigkeit davon anpasst (Fig. 7q), welche der Kleinzellen-Basisstationen im aktiven Modus sind.

7. Verfahren zum Steuern mehrerer Kleinzellen-Basisstationen, wobei das Verfahren eine Telekommunikationssteuerung umfasst:

Empfangen (40) von Messdaten der Pegel eines Pilotsignals, das von jeder der Kleinzellen-Basisstationen gesendet und an anderen der Kleinzellen-Basisstationen empfangen wird;
Bestimmen (42) der Signaldämpfungen zwischen den Kleinzellen-Basisstationen aus den Messdaten;
Berechnen aus den bestimmten Signaldämpfungen (42) zwischen den Kleinzellen-Basisstationen für jeden einer Mehrzahl von Teilsätzen (Fig. 6b) der Kleinzellen-Basisstationen, die ein Pilotsignal bei einer gegebenen Leistung senden, der Pilotsignalleistungen, die voraussichtlich an den anderen Kleinzellen-Basisstationen empfangen werden (Fig. 6c);
Vergleichen (Fig. 6d) der Pilotsignalleistungen, die voraussichtlich an den anderen Basisstationen empfangen werden, mit einer Mindestempfangsleistungsschwelle;
Auswählen (Fig. 6e, h, i) aus der Mehrzahl von Teilsätzen von Kleinzellen-Basisstationen des kleinsten Teilsatzes oder eines der kleinsten Teilsätze, der Pilotsignalleistung über der Schwelle an jeder der anderen Kleinzellen-Basisstationen bereitstellt; und
Anweisen (44) jeder Kleinzellen-Basisstation in diesem Teilsatz, dauerhaft in einem aktiven Modus zu bleiben.

8. Verfahren nach Anspruch 7, wobei, wenn die Telekommunikationssteuerung mehr als einen der kleinsten Teilsätze als eine Pilotsignalleistung über der Schwelle an den anderen Kleinzellen-Basisstationen bereitstellend bestimmt, der eine der kleinsten Teilsätze, der Pilotsignalleistung an den anderen Kleinzellen-Basisstationen bereitstellt, die am höchsten über der Schwelle liegt, durch die Telekommunikationssteuerung ausgewählt wird.

9. Verfahren nach Anspruch 7 oder 8, wobei die Mindestempfangsleistungsschwelle durch die Telekommunikationssteuerung als die Empfangsleistung eines Signals eingestellt wird (46), das an einer der Basisstationen erwartet wird, wenn die entsprechende Empfangsleistung des Signals an ihrem Versorgungszellenrand entfernt von der benachbarten Basisstation, die das Signal sendet, auf einem empfangbaren Mindestleistungspegel ist.

10. Verfahren nach einem der Ansprüche 7 bis 9, wobei,
wenn die Verkehrslast an einer der Kleinzellen-Basisstationen im aktiven Modus nach dem Senden der Anweisung durch die Telekommunikationssteuerung an jede Kleinzellen-Basisstation im ausgewählten Teilsatz, dauerhaft im aktiven Modus zu bleiben, unter ein gegebenes Maß abfällt, Bestimmungen von der Telekommunikationssteuerung im Hinblick darauf vorgenommen werden, ob (Fig. 7s):

die Kleinzellen-Basisstation eine in dem ausgewählten Teilsatz ist, der dauerhaft im aktiven Modus bleiben soll, und
die Verkehrslast an einer benachbarten Kleinzellen-Basisstation ein gegebenes Niveau überschreiten würde, wenn die Kleinzellen-Basisstation in den Schlafmodus versetzt würde; und
die Basisstation auf Anweisung der Telekommunikationssteuerung in den Schlafmodus versetzt wird, vorausgesetzt, dass die Kleinzellen-Basisstation nicht eine im ausgewählten Teilsatz ist, der dauerhaft im aktiven Modus bleiben soll, und die Verkehrslast an den benachbarten Kleinzellen-Basisstationen nicht ein gegebenes Niveau überschreiten würde, sollte die Kleinzellen-Basisstation in den Schlafmodus versetzt werden.

11. Verfahren nach einem der Ansprüche 7 bis 10, wobei:

wenn die Verkehrslast an einer der Kleinzellen-Basisstationen im aktiven Modus nach dem Senden der Anweisung durch die Telekommunikationssteuerung an jede Kleinzellen-Basisstation im ausgewählten Teilsatz, dauerhaft im aktiven Modus zu bleiben, ein zweites gegebenes Maß überschreitet, eine Bestimmung von der Telekommunikationssteuerung im Hinblick darauf vorgenommen wird, ob diese Kleinzellen-Basisstation eine benachbarte Kleinzellen-Basisstation im Schlafmodus aufweist (Fig. 7n); und

die benachbarte Basisstation bei Bestimmen durch die Telekommunikationssteuerung, dass die Kleinzellen-Basisstation eine benachbarte Kleinzellen-Basisstation im Schlafmodus aufweist, auf Anweisung der Telekommunikationssteuerung in den aktiven Modus versetzt wird (Fig. 7q).

**12.** Verfahren nach Anspruch 10 oder 11, wobei Sendeleistungen der Kleinzellen-Basisstationen im aktiven Modus durch die Telekommunikationssteuerung in Abhängigkeit davon angepasst werden, welche der Kleinzellen-Basisstationen im aktiven Modus ist.

## Revendications

**1.** Contrôleur de télécommunications (18) configuré pour une connexion (16) avec de multiples stations de base à petite cellule, le contrôleur comprenant :

un récepteur (40) configuré pour recevoir des données mesurées des niveaux d'un signal pilote envoyé depuis chacune des stations de base à petite cellule et reçues sur d'autres parmi les stations de base à petite cellule ;

un processeur (42) configuré pour déterminer à partir des données mesurées les atténuations de signal entre les stations de base à petite cellule ;

un moyen d'estimation de puissance reçue (42) configuré pour calculer (Fig. 6c) à partir des atténuations de signal déterminées entre les stations de base à petite cellule, pour chacun d'une pluralité de sous-ensembles des stations de base à petite cellule transmettant un signal pilote à une puissance donnée, les puissances de signal pilote censées être reçues sur les autres stations de base à petite cellule ;

un moyen de comparaison (44, Fig. 6d) configuré pour comparer lesdites puissances de signal pilote censées être reçues sur les autres stations de base à petite cellule à un seuil de puissance reçue minimal (46) ;

un moyen de sélection (44, Fig. 6e, h, i) configuré pour sélectionner, parmi la pluralité de sous-ensembles de stations de base à petite cellule, le plus petit sous-ensemble qui, ou l'un des plus petits sous-ensembles qui, produit une puissance de signal pilote supérieure au seuil sur chacune des autres stations de base à petite cellule ; et

un moyen d'instruction (44) configuré pour envoyer une instruction à chaque station de base à petite cellule dans ce sous-ensemble de rester en permanence en mode actif.

**2.** Contrôleur de télécommunications selon la revendication 1, dans lequel le moyen de sélection est configuré pour, suite à la détermination de plusieurs des sous-ensembles les plus petits comme produisant une puissance de signal pilote supérieure au seuil sur les autres stations de base à petite cellule, sélectionner celui des plus petits sous-ensembles qui produit la puissance de signal pilote la plus au-dessus du seuil sur les autres stations de base à petite cellule.

**3.** Contrôleur de télécommunications selon l'une quelconque des revendications précédentes, comprenant un moyen (46) de réglage du seuil de puissance reçue minimal en tant que puissance reçue d'un signal attendu sur l'une des stations de base lorsque la puissance reçue correspondante du signal sur sa limite de cellule de couverture éloignée de la station de base voisine transmettant le signal est à un niveau de puissance recevable minimal.

**4.** Contrôleur de télécommunications selon l'une quelconque des revendications précédentes, configuré pour, en utilisation :

après l'envoi de l'instruction à chaque station de base à petite cellule dans le sous-ensemble sélectionné de rester en permanence en mode actif, suite au passage d'une charge de trafic de l'une quelconque des stations de base à petite cellule en mode actif en-dessous d'une quantité donnée, déterminer si (Fig. 7s) :

la station de base à petite cellule est l'une du sous-ensemble sélectionné pour rester en permanence en mode actif, et

la charge de trafic sur une ou plusieurs stations de base à petite cellule voisines dépasse un niveau donné auquel la station de base à petite cellule doit être placée en mode veille ; et placer la station de base à petite cellule en mode veille à condition que la station de base à petite cellule ne soit pas l'une du sous-ensemble sélectionné pour rester en permanence en mode actif et que la charge de trafic sur les stations de base à petite cellule voisines, si la station de base à petite cellule est placée en mode veille, ne dépasse pas un niveau donné.

**5.** Contrôleur de télécommunications selon l'une quelconque des revendications précédentes, configuré pour :
après l'envoi de l'instruction à chaque station de base à petite cellule dans le sous-ensemble sélectionné de rester en permanence en mode actif, suite au passage d'une charge de trafic de l'une quelconque des stations de base à petite cellule en mode actif au-dessus d'une seconde quantité donnée, déterminer si la station de base à petite cellule a une station de base à petite cellule voisine en mode veille (Fig. 7n), et configuré pour :
suite à la détermination que la station de base à petite cellule a une station de base à petite cellule voisine en mode veille, placer (Fig. 7q) la station de base voisine en mode actif.

**6.** Contrôleur de télécommunications selon la revendication 4 ou 5, configuré pour ajuster (Fig. 7q) les puissances de transmission des stations de base à petite cellule en mode actif en fonction de celles des stations de base à petite cellule qui sont en mode actif.

**7.** Procédé de commande de multiples stations de base à petite cellule, le procédé comprenant un contrôleur de télécommunications :

recevant (40) des données mesurées des niveaux d'un signal pilote envoyé depuis chacune des stations de base à petite cellule et reçues sur d'autres parmi les stations de base à petite cellule ;
déterminant (42) à partir des données mesurées les atténuations de signal entre les stations de base à petite cellule ;
calculant à partir des atténuations de signal déterminées (42) entre les stations de base à petite cellule, pour chacun d'une pluralité de sous-ensembles (Fig. 6b) des stations de base à petite cellule transmettant un signal pilote à une puissance donnée, les puissances de signal pilote censées être reçues sur les autres stations de base à petite cellule (Fig. 6c) ;
comparant (Fig. 6d) lesdites puissances de signal pilote censées être reçues sur les autres stations de base à petite cellule à un seuil de puissance reçue minimal ;
sélectionner (Fig. 6e, h, i) parmi la pluralité de sous-ensembles de stations de base à petite cellule, le plus petit sous-ensemble qui, ou l'un des plus petits sous-ensembles qui, produit une puissance de signal pilote supérieure au seuil sur chacune des autres stations de base à petite cellule ; et
donner l'instruction (44) à chaque station de base à petite cellule dans ce sous-ensemble de rester en permanence en mode actif.

**8.** Procédé selon la revendication 7, dans lequel suite à la détermination par le contrôleur de communications de plusieurs des sous-ensembles les plus petits comme produisant une puissance de signal pilote supérieure au seuil sur les autres stations de base à petite cellule, celui des sous-ensembles les plus petits qui produit la puissance de signal pilote la plus au-dessus du seuil sur les autres stations de base à petite cellule est sélectionné par le contrôleur de télécommunications.

**9.** Procédé selon la revendication 7 ou 8, dans lequel le seuil de puissance reçue minimal est réglé (46) par le contrôleur de télécommunications en tant que puissance reçue d'un signal attendu sur l'une des stations de base lorsque la puissance reçue correspondante du signal sur sa limite de cellule de couverture éloignée de la station de base voisine transmettant le signal est à un niveau de puissance recevable minimal.

**10.** Procédé selon l'une quelconque des revendications 7 à 9, dans lequel :
après l'envoi par le contrôleur de télécommunications de l'instruction à chaque station de base à petite cellule dans le sous-ensemble sélectionné de rester en permanence en mode actif, suite au passage de la charge de trafic sur l'une quelconque des stations de base à petite cellule en mode actif en-dessous d'une quantité donnée, le contrôleur de télécommunications détermine si (Fig. 7s) :

la station de base à petite cellule est l'une du sous-ensemble sélectionné pour rester en permanence en mode actif, et
la charge de trafic sur une ou plusieurs stations de base à petite cellule voisines dépasse un niveau donné auquel la station de base à petite cellule doit être placée en mode veille ; et
la station de base à petite cellule est placée en mode veille sur l'instruction du contrôleur de télécommunications à condition que la station de base à petite cellule ne soit pas l'une du sous-ensemble sélectionné pour rester en permanence en mode actif et que la charge de trafic sur les stations de base à petite cellule voisines, si la station de base à petite cellule est placée en mode veille, ne dépasse pas un niveau donné.

**11.** Procédé selon l'une quelconque des revendications 7 à 10, dans lequel :

après l'envoi par le contrôleur de télécommunications de l'instruction à chaque station de base à petite cellule dans le sous-ensemble sélectionné de rester en permanence en mode actif, suite au passage de la charge de trafic sur l'une quelconque des stations de base à petite cellule en mode actif au-dessus d'une seconde quantité donnée, le contrôleur de télécommunications détermine si la station de base à petite cellule a une station de base à petite cellule voisine en mode veille (Fig. 7n) ; et

suite à la détermination par le contrôleur de télécommunications que la station de base à petite cellule a une station de base à petite cellule voisine en mode veille, sur l'instruction du contrôleur de télécommunications, la station de base voisine est placée (Fig. 7q) en mode actif.

**12.** Procédé selon la revendication 10 ou 11, dans lequel les puissances de transmission des stations de base à petite cellule en mode actif sont ajustées par le contrôleur de télécommunications en fonction de celles des stations de base à petite cellule qui sont en mode actif.

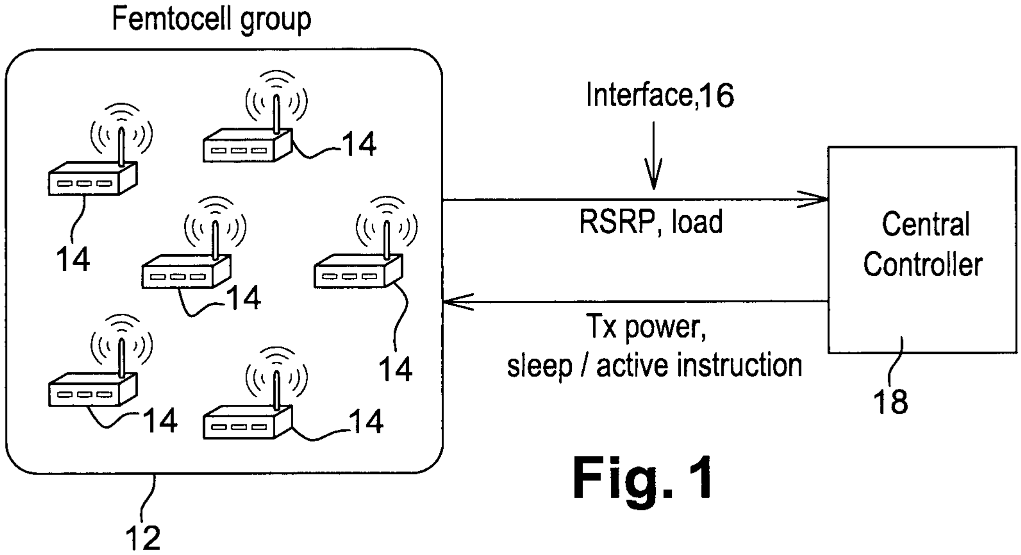
Femtocell group
14
14
14
14
14
14
14
12
Interface,16
RSRP, load
Tx power,
sleep / active instruction
Central
Controller
18

Fig. 1

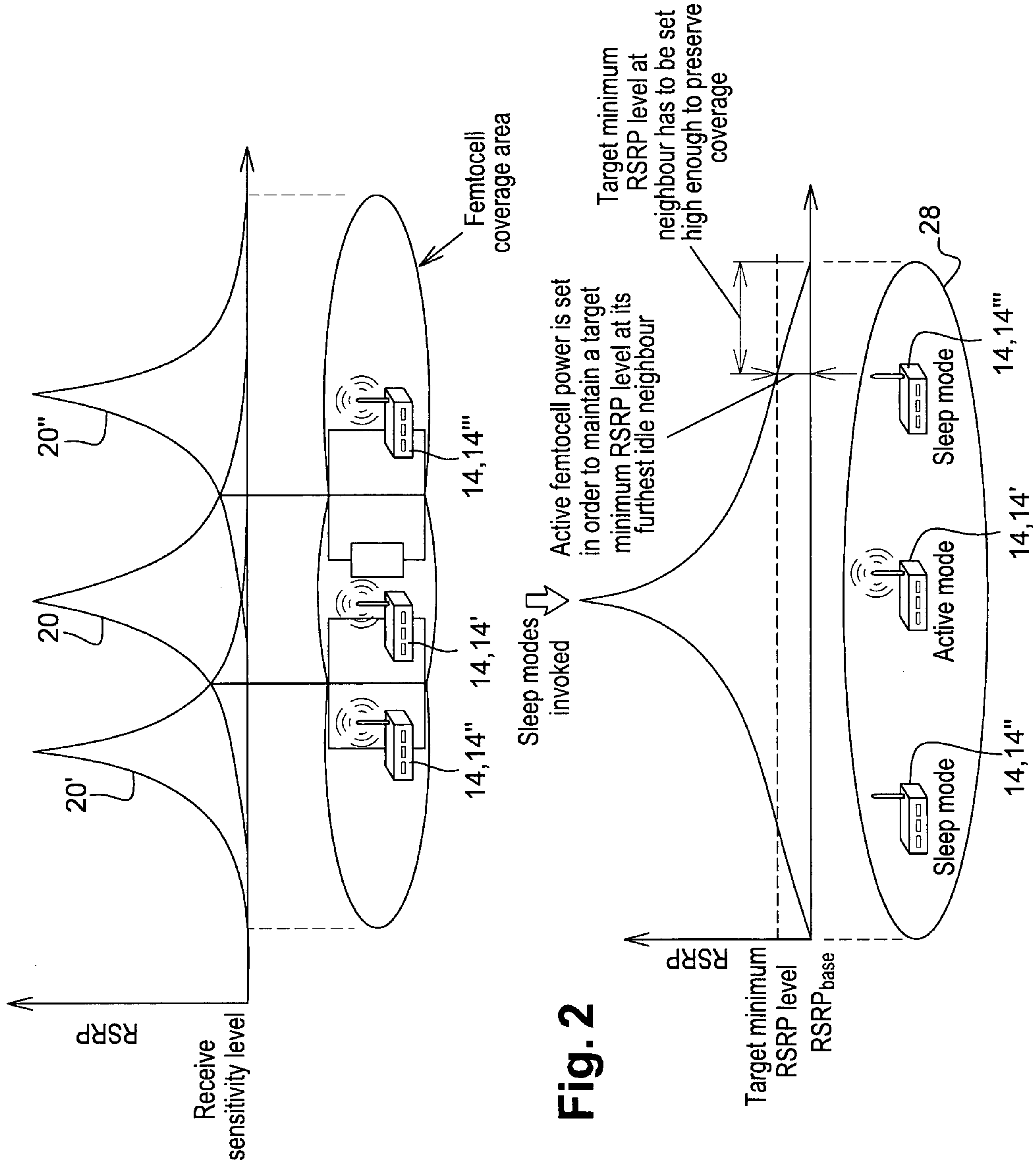
RSRP
Receive sensitivity level
20'
20
20''
14,14''
14,14'
14,14'''
Femtocell coverage area
RSRP
Target minimum RSRP level
RSRPbase
Sleep modes invoked
Active femtocell power is set in order to maintain a target minimum RSRP level at its furthest idle neighbour
Target minimum RSRP level at neighbour has to be set high enough to preserve coverage
28
Sleep mode
Active mode
Sleep mode
14,14''
14,14'
14,14'''

Fig. 2

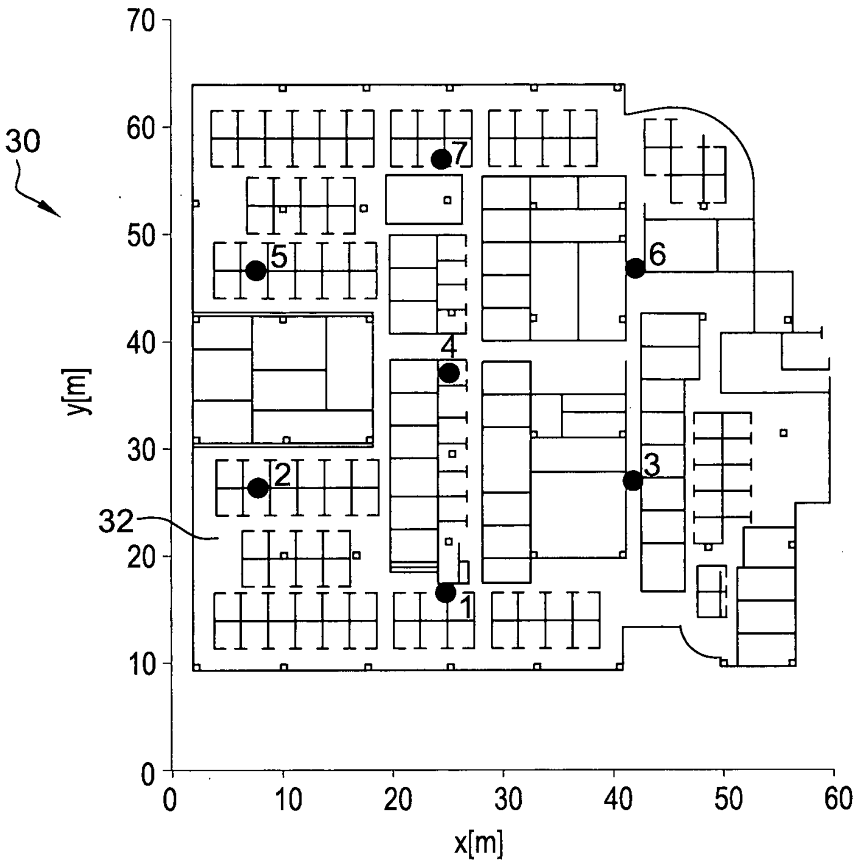
30
32
70
60
50
40
30
20
10
0
y[m]
0
10
20
30
40
50
60
x[m]
1
2
3
4
5
6
7

Fig. 3

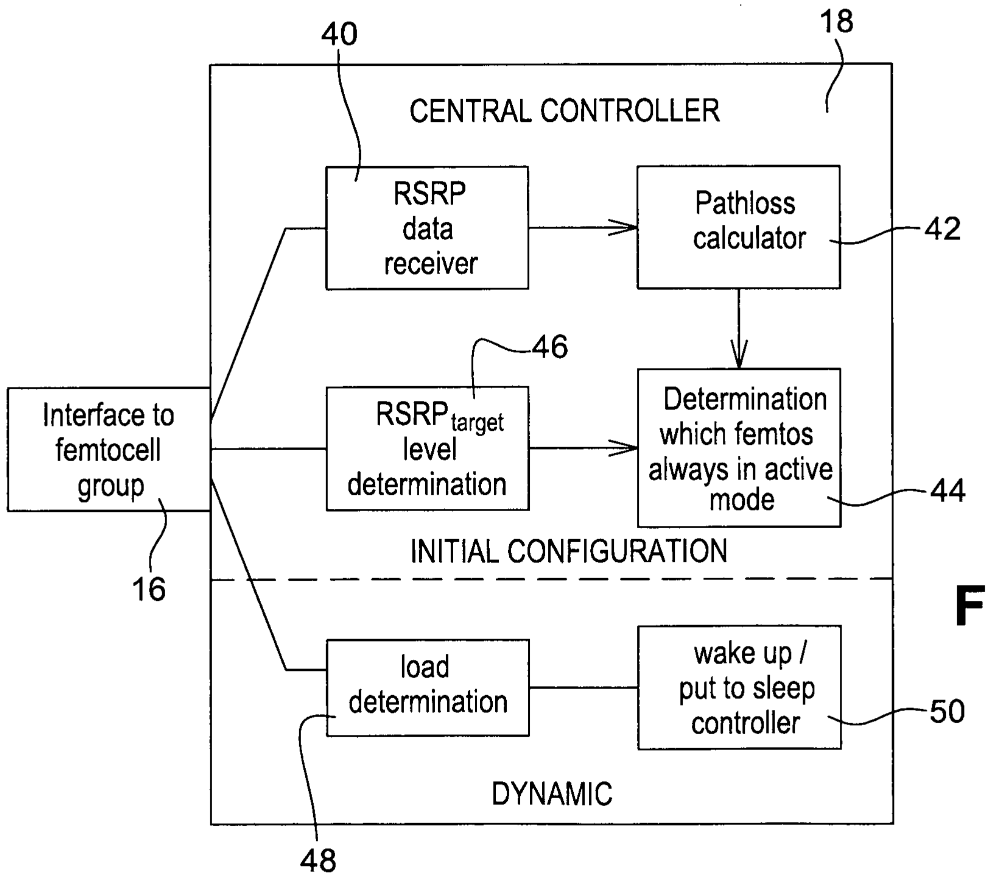
CENTRAL CONTROLLER
18
40
RSRP data receiver
Pathloss calculator
42
46
Interface to femtocell group
16
RSRP$_{target}$ level determination
Determination which femtos always in active mode
44
INITIAL CONFIGURATION
load determination
wake up / put to sleep controller
50
48
DYNAMIC

Fig. 4

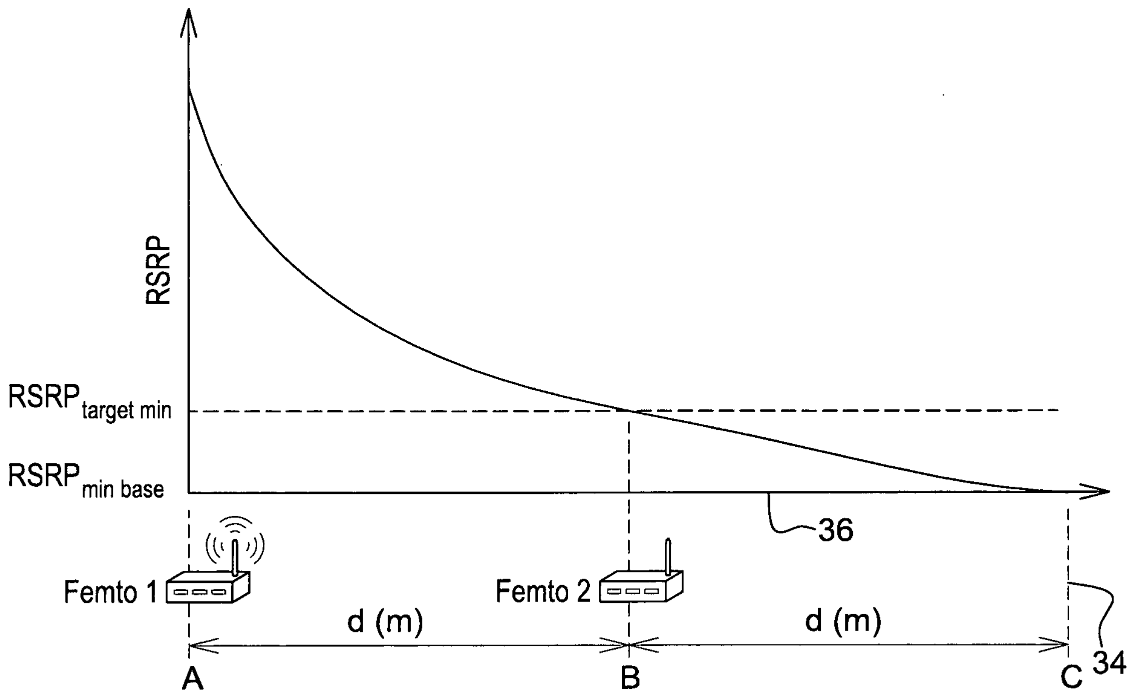
RSRP
RSRP target min
RSRP min base
36
Femto 1
Femto 2
d (m)
d (m)
A
B
C
34

**Fig. 5**

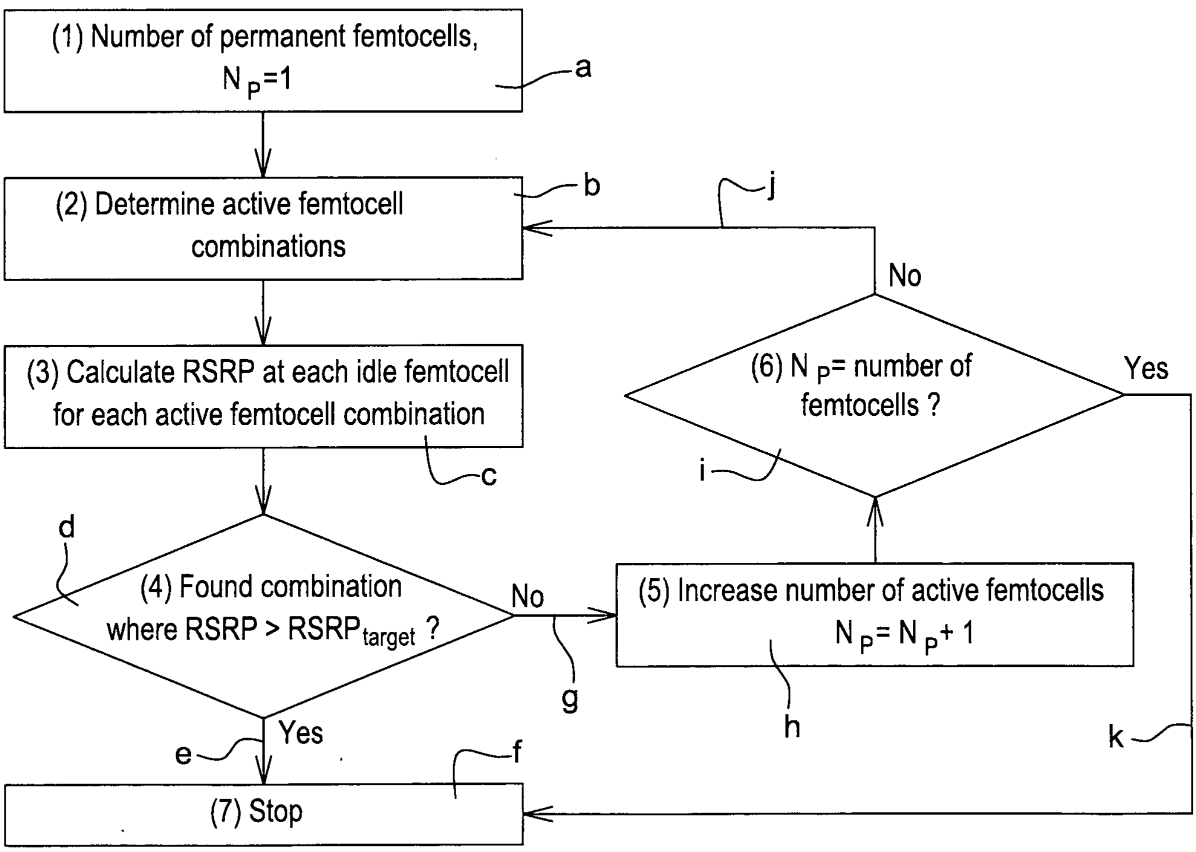
(1) Number of permanent femtocells, N P=1
a
(2) Determine active femtocell combinations
b
j
No
(3) Calculate RSRP at each idle femtocell for each active femtocell combination
c
(6) N P= number of femtocells ?
Yes
i
d
(4) Found combination where RSRP > RSRPtarget ?
No
(5) Increase number of active femtocells N P= N P+ 1
g
h
Yes
e
f
k
(7) Stop

**Fig. 6**

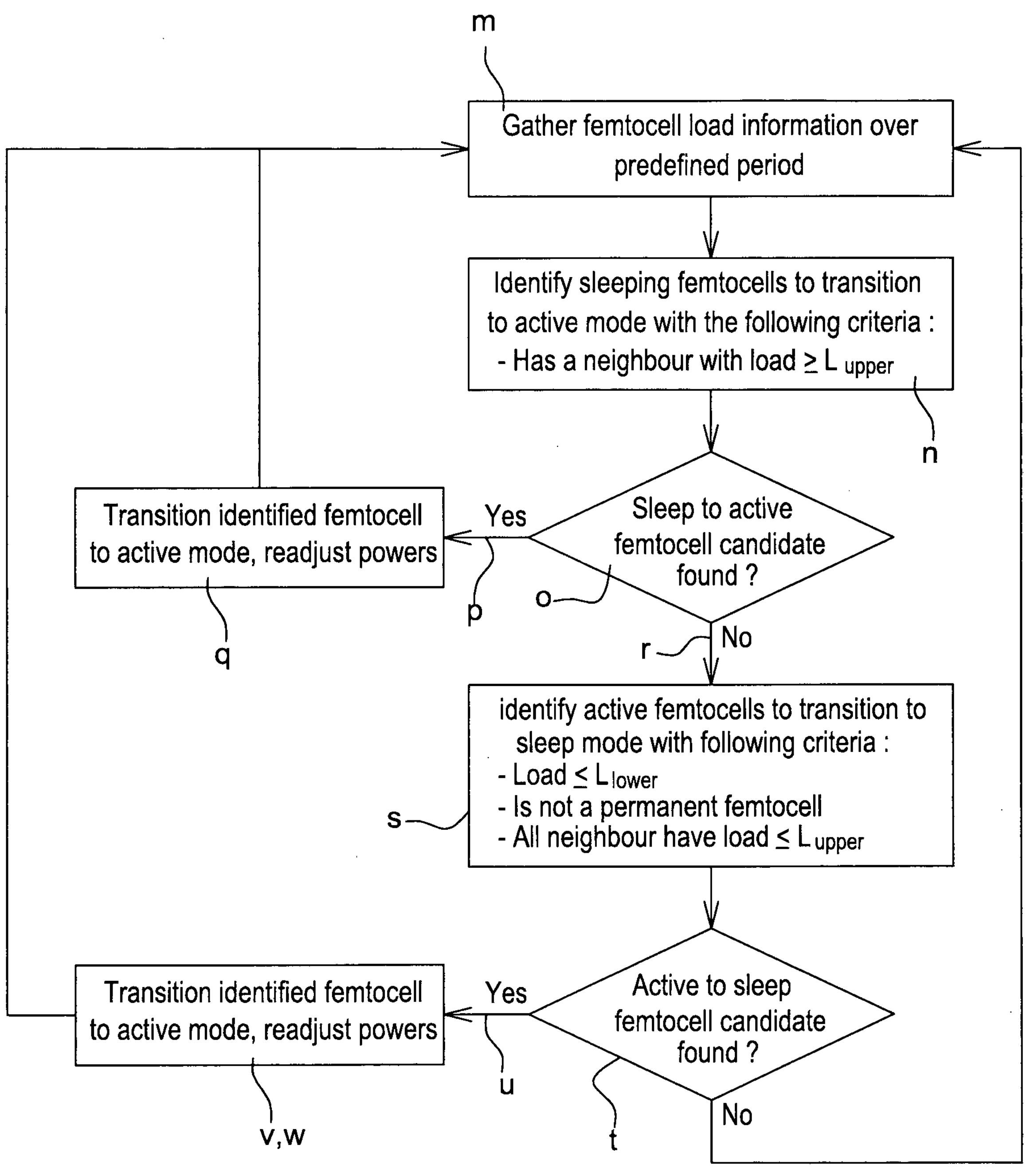


DYNAMIC STAGE

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2012307780 A1


### Non-patent literature cited in the description


- **I. ASHRAF ; F. BOCCARDI ; L. HO.** Sleep mode techniques for small cell deployments. *IEEE Communications Magazine,* August 2011, vol. 49 (8), 72-79
- Reducing Energy Consumption in LTE with Cell DTX. **P. FRENGER ; P. MOBERG ; J. MALMODIN ; Y. JADING ; I. GÓDOR.** Proc. IEEE VTC-Spring 2011. GreeNet workshop, May 2011
- **A. PRASAD ; A. MAEDER ; C. NG.** Energy Efficient Small Cell Activation Mechanism for Heterogeneous Networks. *Proc. IEEE Globecom 2013,* December 2013
- **Y. QU ; Y. CHANG ; Y. SUN ; D. YANG.** Equilibrated Activating Strategy with Small Cell for Energy Saving in Heterogeneous Network. *Proc. IEEE VTC-Fall 2014,* September 2014
- **E. TERNON ; P. AGYAPONG ; L. HU ; A. DCKORSY.** Energy Savings in Heterogeneous Networks with Clustered Small Cell Deployments. *Prox. IEEE ISWCS 2014,* August 2014
- 3rd Generation Partnership Project; Technical Specification Group Radio Access Network; Evolved Universal Terrestrial Radio Access (E-UTRA); Study on Energy Saving Enhancement for E-UTRAN (Release 12). 3GPP DRAFT; R3-141502, 3RD GENERATION PARTNERSHIP PROJECT (3GPP). MOBILE COMPETENCE CENTRE, 24 May 2014
- Importance of load information exchange in energy saving. **KPN B V et al.** 3GPP DRAFT; R3-103694, 3RD GENERATION PARTNERSHIP PROJECT (3GPP). MOBILE COMPETENCE CENTRE, 19 November 2010